# EUROPÄISCHE PATENTSCHRIFT

(11) **EP 1 663 727 B1**
(45) Veröffentlichungstag und Bekanntmachung des Hinweises auf die Patenterteilung: **23.04.2008**
(21) Anmeldenummer: 04764659.1
(22) Anmeldetag: 31.08.2004
(51) Int. Cl.: B60R 21/015, B60N 2/427

(54) **VORRICHTUNG UND VERFAHREN ZUM INSASSENSCHUTZ IN EINEM FAHRZEUG**
DEVICE AND METHOD FOR PROTECTING PASSENGERS IN A VEHICLE
DISPOSITIF ET PROCEDE DE PROTECTION POUR OCCUPANT D'UN VEHICULE

(30) Priorität: 08.09.2003 DE 10341328
(43) Veröffentlichungstag der Anmeldung: 07.06.2006
(73) Patentinhaber: Fraunhofer-Gesellschaft zur Förderung der angewandten Forschung e.V., 80686 München (DE); Faurecia Innenraum Systeme GmbH, 76767 Hagenbach (DE)
(72) Erfinder: MELZ, Tobias, 64285 Darmstadt (DE); MATTHIAS, Michael, 64287 Darmstadt (DE); ZIMMERMAN, Eric, 34125 Kassel (DE); AUFMOLK, Rudolf, 64521 Gross Gerau (DE); KÖLLNER, Harald, 63674 Altenstadt (DE)
(74) Vertreter: Rösler, Uwe
(86) Internationale Anmeldenummer: PCT/EP2004/009694
(87) Internationale Veröffentlichungsnummer: WO 2005/025945

(56) Entgegenhaltungen:
- EP-B- 0 691 910
- DE-A- 2 344 689
- DE-A- 4 209 605
- DE-A- 10 061 043
- DE-A- 19 530 219
- US-A1- 2002 145 315

## Beschreibung

### Technisches Gebiet

Die Erfindung bezieht sich auf eine Vorrichtung sowie auf ein Verfahren zum Insassenschutz in einem Fahrzeug, insbesondere in einem Kraftfahrzeug, durch Reduzierung eines Krafteintrages, der im Wege einer Kollision des Fahrzeuges hervorgerufen, auf einen, auf einem Fahrzeugsitz sitzenden Insassen physiologisch einwirkt, mit einem relativ zum Fahrzeug beweglich angeordneten Fahrzeugsitz, der durch wenigstens einen ansteuerbaren Aktor aus einer Ruheposition in Bewegung relativ zum Fahrzeug versetzbar ist, sowie einer Auswerte- und Steuereinheit, die in Abhängigkeit von Gebersignalen, die von am Fahrzeug angebrachten Gebern herrühren, sowie von vorgebbaren Referenzwerten den Aktor zur gezielten Fahrzeugsitzbewegung ansteuert.

### Stand der Technik

Eine Vorrichtung zum Insassenschutz in einem Fahrzeug der vorstehend genannten Gattung, durch die der im Wege einer Fahrzeugkollision auf einen Insassen des Fahrzeuges einwirkende physiologisch wirksame Krafteintrag reduziert werden soll, geht beispielsweise aus der DE 23 44 689 hervor, bei der im Falle eines Aufpralls der Fahrzeugsitz mittels einer Betätigungsvorrichtung entgegen der Fahrtrichtung bzw. in Fahrtrichtung bewegt wird, wobei die Sitzverzögerung im Rahmen des menschlichen Erträglichkeitsbereiches schnell ansteigt und dann auf einen in diesem Rahmen liegenden, im wesentlichen konstanten Niveau gehalten wird. Die hierfür erforderliche Betätigungsvorrichtung wird durch einen druckgesteuerten Zylinder gebildet, der mit Hilfe konventioneller Gebertechnik erst nach dem Kollisionsereignis aktiviert wird.

Eine Verbesserung der vorbeschriebenen Insassenschutzvorrichtung geht aus der EP 0 691 910 B1 hervor, die ebenfalls einen relativ zur Fahrzeugkarosserie bewegbaren Fahrzeugsitz vorsieht, bei der jedoch eine Sitzauslenkung gegenüber der Fahrzeugkarosserie bereits zu einem Zeitpunkt erfolgt, zu dem ein bevorstehender Aufprall als unvermeidlich erkannt wird. Eine rechtzeitige Früherkennung einer Kollisionssituation erfolgt mit Hilfe einer geeignet am Fahrzeug angebrachten Annäherungssensorik, die bei Detektion eines zeitlich nah bevorstehenden Kollisionsereignis entsprechend am Kraftfahrzeugsitz angebrachte Aktoren aktiviert, die mittels hydraulischer, pneumatischer, mechanischer, pyrotechnischer oder elektrischer Wirkmechanismen arbeiten. Alle bisher bekannten Aktoren sind in Abhängigkeit des jeweiligen Funktionsprinzips, wie vorstehend reihenhaft aufgezählt, unterschiedlich kompliziert aufgebaut und bedürfen einer gesondert durchzuführenden Wartung, soll gewährleistet werden, dass die Aktoren fehlerfrei im Kollisionsfall funktionieren. Auch erlauben die bisher bekannten und eingesetzten Aktoren keine oder nur eine sehr begrenzte Möglichkeit zur Einstellung der Aktorfunktion in Abhängigkeit zu dem jeweiligen Kollisionsfall sowie zu Größe und Gewicht der auf einem Fahrzeugsitz sitzenden Person.

Darüber hinaus beschränken sich die bisher bekannten Sitzverstellungen relativ zur Fahrzeugkarosserie in oder entgegen der Fahrtrichtung, so dass der Insassenschutz mit den bis dahin bekannten Systemen, insbesondere bei schräg zur Fahrtrichtung auf das Fahrzeug einwirkenden Kollisionsmomenten oder gar bei Seitenaufprall-Kollisionen, in einem nur sehr begrenzten Umfang verbessert werden kann.

In der DE 195 30 219 ist eine Verkippvorrichtung für einen Kraftfahrzeugsitz beschrieben, der um eine in Fahrtrichtung verlaufende Seitenkante verkippbar gelagert ist. Aus den unterschiedlichen Büddarstellungen, die der Druckschrift entnehmbar sind, geht hervor, dass der Kfz-Sitz mit Hilfe geeigneter Federsysteme aus eine Ruheposition in eine gekippte Lage überführbar ist. Die Federsysteme können aus Gummi oder Gummi-ähnlichen Kunststoffen bestehen.

Der DE 42 09 605 A1 ist eine Sicherheitsvorrichtung zum Schutz eines Fahrzeuginsassen bei einem Seitencrash zu entnehmen, gemäß der die Kfz-Sitze um ihre jeweilige Hochachse drehbar gelagert sind. Im Falle eines Seitencrashes werden die Sitze derart verschwenkt, dass ein Bereich der Rückenlehne des jeweiligen Sitzes zwischen den Fahrzeuginsassen und die vom Crash beaufschlagte Seitenwand des Fahrzeugs verschwenkt wird. Zur Verschwenkung dienen elektromotorische oder pyrotechnische Antriebe, durch die die Sitze aus ihrer Ruhestellung verschwenkt werden.

DE-A-10061043 zeigt die Merkmale des Oberbegriffs des Anspruch 1.

### Darstellung der Erfindung

Der Erfindung liegt die Aufgabe zugrunde, eine Vorrichtung sowie ein Verfahren zum Insassenschutz in einem Fahrzeug, insbesondere in einem Kraftfahrzeug, durch Reduzierung eines Krafteintrages, der im Wege einer Kollision des Fahrzeuges hervorgerufen, auf einen, auf einem Fahrzeugsitz sitzenden Insassen physiologisch einwirkt, mit einem relativ zum Fahrzeug beweglich angeordneten Fahrzeugsitz, der durch wenigstens einen ansteuerbaren Aktor aus einer Ruheposition in Bewegung relativ zum Fahrzeug versetzbar ist, sowie mit einer Auswerte- und Steuereinheit, die in Abhängigkeit von Gebersignalen; die von am Fahrzeug angebrachten Gebern herrühren, sowie von vorgebbaren Referenzwerten, den Aktor zur gezielten Fahrzeugsitzbewegung ansteuert, derart weiterzubilden, dass der Insassenschutz in Kollisionsfällen verbessert werden soll, insbesondere die auf den jeweiligen Insassen einwirkenden Kraftmomente auf ein physiologisch erträgliches Maß reduziert werden sollen, um letztlich die Verletzungsgefahr von Insassen entscheidend zu reduzieren. Die technisch zu treffenden Maßnahmen sollen mit möglichst einfachen Mitteln realisierbar sein, die keinerlei Wartungsaufwand bedürfen und dennoch zuverlässig arbeiten sollen.

Die Lösung der der Erfindung zugrunde liegenden Aufgabe sind im Anspruch 1 und 2 angegeben.
Den Erfindungsgedanken vorteilhaft weiterbildende Merkmale sind Gegenstand der Unteransprüche sowie der Beschreibung unter Bezugnahme auf die Ausführungsbeispiele zu entnehmen.

Erfindungsgemäß ist eine Vorrichtung gemäß dem Oberbegriff des Patentanspruches 1 derart ausgebildet, dass der wenigstens eine ansteuerbare Aktor eine intelligente Struktur aufweist, die durch Ansteuerung auf der Grundlage wenigstens eines Wandlerwerkstoffes eine die Fahrzeugsitzbewegung initiierende Formänderung erfährt.

Wandlerwerkstoffe sind an sich bekannte Werkstoffe, die insbesondere in Bereichen der Mechatronik und Adaptronik Verwendung finden und üblicherweise durch Zuführung bzw. Kontrolle von Energie eine Aktivierung, bzw. Steuerung von Materialeigenschaften eine verkoppelte, gut steuerbare Änderung strukturmechanischer Eigenschaften wie Dämpfung, Steifigkeit und Geometrie erlauben. Derartige Werkstoffe sind insbesondere in Fällen von Interesse, in denen die Werkstoffe zur Stoß- oder Schwingungsabsorption eingesetzt werden.

Zur Steuerung von Wandlerwerkstoffen stehen je nach Werkstoffart unterschiedliche Energieformen zur Verfügung, wie beispielsweise elektrische, magnetische und/oder thermische Energie. Für den erfindungsgemäßen Einsatzzweck eignen sich in besonders vorteilhafter Weise Feststoff-Wandlerwerkstoffe, wie beispielsweise Piezo-Keramiken, elektrostriktive Keramiken, magnetostriktive Legierungen, allen voran jedoch Formgedächtnislegierungen bzw. Formgedächtnismetalle. Letztere erfahren durch gezieltes Anlegen einer elektrischen Spannung eine spontane Formänderung. Die elektrische Spannung ruft innerhalb des Werkstoffes einen Stromfluss hervor, der im Wege der ohmschen Verlustwärme zu einer spontanen Erwärmung des Werkstoffes und einer damit verbundenen Gefügeänderung führt. Bekannte Vertreter dieser Wandlerwerkstoffgruppe sind bspw. Nickel-Titan-Legierungen, die bei entsprechender elektrischer Bestromung eine spontane Volumenausdehnung von bis zu 8 % zu erreichen vermögen. Diese Eigenschaft lässt diesen Werkstoff in besonderer Weise in den Mittelpunkt der weiteren Anwendung zur Integration in einen Aktor, im Sinne einer intelligenten Struktur, zur gezielten Fahrzeugsitzbewegung sowie-lagerung, rücken.

Grundsätzlich lassen sich jedoch auch Aktoren realisieren, die die Integration von flüssigen oder viskosen Wandlerwerkstoffe ermöglichen, beispielsweise durch entsprechende Kapselung von Piezo-Polymeren, elektrorheologischen, magnetorheologische Fluiden sowie Polymer-Gele, wie auch Formgedächtnispolymere. Derartige im Vergleich zu Festkörper-Wandlerwerkstoffen zu Integrationszwecken in einem Aktor komplizierter erscheinende Werkstoffe mögen zwar in den weiteren Ausführungen nicht als vordergründig relevant erscheinen, doch soll ihr Einsatz im erfindungsgemäßen Sinne von der, der Erfindung zugrunde liegenden Idee mit umfasst sein. Ebenso ist prinzipiell der Einsatz konventioneller Aktoren zur Bewegung des Sitzes in beschriebener Weise denkbar.

Der gezielte Einsatz intelligenter Strukturen in wenigstens einem die Fahrzeugsitzposition innerhalb eines Kraftfahrzeuges verändernden Aktor eröffnet nicht nur die Möglichkeit, den Fahrzeugsitz mit einer vernachlässigbaren Ansprechgeschwindigkeit in seiner Position relativ zum Kraftfahrzeug zu verändern, darüber hinaus bieten Wandlerwerkstoffe eine kontrollierbare, variabel und individuell regelbare Einstellmöglichkeit der Materialsteifigkeit und Dämpfung wodurch sich die dynamischen Eigenschaften hier des Sitzes gezielt steuern lassen. Gegenüber konventionellen Aktoren, die, wie eingangs erwähnt, beispielsweise zu Zwecken der räumlichen Auslenkung ein Ineinanderwirken mehrerer Komponenten voraussetzen, wie beispielsweise Hubkolbensysteme, basiert der Auslenkmechanismus bei Wandlerwerkstoffen auf der Basis intrinsischer Materialänderungen, die näherungsweise keinerlei Verschleisseffekte aufweisen und daher wartungsfrei sind.

Eine bevorzugte Ausführungsform eines Fahrzeugsitzes sieht daher zwischen dem Bodenbereich der Fahrzeugkarosserie und dem Fahrzeugsitz wenigstens einen als intelligente Struktur ausgebildeten Aktor vor, der zumindest kurz vor aber vor allem während einer Kollision in Wirkverbindung mit dem Fahrzeugsitz tritt, um diesen gezielt auszulenken.

Zur Vermeidung einer direkten Dauerbelastung ggf. Alterung des Aktors, z.B. durch die Trägheit des Fahrzeugsitzes sowie einer darauf befindlichen Person, ist der Fahrzeugsitz vorzugsweise über aktiv lösbare, verriegelbare Abstützstellen auf dem Bodenbereich der Karosserie abgestützt, die vor bzw. während einer Kollision entriegelbar sind, so dass der Fahrzeugsitz vermittels des Aktors in eine bestimmte Richtung bewegbar bzw. schwenkbar ist.

Selbstverständlich können zur gezielten Fahrzeugsitzbewegung eine Vielzahl von Aktoren vorgesehen werden, die vorzugsweise zwischen dem Bodenbereich der Karosserie und dem Fahrzeugsitz an geeigneten Stellen plaziert sind, so dass der Fahrzeugsitz nicht nur in der Ebene des Fahrzeugbodens bewegbar, sondern insbesondere auch durch Verkippen des Fahrzeugsitzes um eine in Fahrtrichtung sowie auch quer dazu verlaufende Achse verkippbar ist.

So ist neben dem gezielten Einsatz von auf Wandlerwerkstoffen beruhenden Aktoren zur Fahrzeugsitzbewegung im Kollisionsfall überdies erfindungsgemäß erkannt worden, dass der im Kollisionsfall auf einen Insassen wirkende Energieeintrag durch gezielte Rotation des Fahrzeugsitzes vor und während des Kollisionsfalles zu einer deutlichen Reduzierung der am Insassen verursachten kollisionsbedingten Schäden führt.

Eine erfindungsgemäße Ausgestaltung eines Fahrzeugsitzes, dessen Beweglichkeit wenigstens durch zwei Raumachsen beschreibbar ist, nämlich eine in Fahrzeuglängsrichtung gerichtete x-Achse und eine senkrecht zur x-Achse orientierte y-Achse, die zugleich senkrecht zu einer durch den Fahrzeugsitz hindurchtretenden Hochachse, die sogenannte z-Achse, orientiert ist, sieht wenigstens einen Aktor derart zwischen dem Bodenbereich der Fahrzeugkarosserie und dem Fahrzeugsitz vor, dass der Fahrzeugsitz um die x-Achse schwenkbar ist. Ferner ist vorzugsweise wenigstens ein weiterer Aktor derart vorgesehen, dass der Fahrzeugsitz um die y-Achse schwenkbar ist. Vorgesehen ist ebenso die Ausgestaltung derart, dass eine Rotation um die z-Achse möglich ist.

So erweist es sich in Kollisionsfällen, bei denen ein seitlicher Energieeintrag auf das Fahrzeug einwirkt (Seitenaufprall-Konstellation) aus Gründen der Minderung der physiologischen Insassenbeanspruchung als besonders vorteilhaft, wenn der Fahrzeugsitz vor und im Moment des Seitenaufpralls eine Rotation um die x-Achse, vergleichbar einer Rollbewegung, erfährt, so dass der Winkel zwischen dem vom Seitenaufprall herrührenden Crashenergiefluß und der Wirbelsäulenerstreckung des jeweiligen Insassen größer oder kleiner 90° und nicht wie im Normalfall ohne Sitzrotation weitgehend 90° beträgt. Handelt es sich hingegen um einen Frontalzusammenstoß, so begünstigt eine Rotation des Fahrzeugsitzes um die y-Achse eine Minderung der physiologischen Insassenbeanspruchung durch eine kontrolliert gesteuerte Nickbewegung derart, dass der Rumpf- und Kopfbereich des jeweiligen Insassen entgegen oder in der Fahrtrichtung samt Fahrzeugsitz geschwenkt wird.

Auch sind Lösungen denkbar, insbesondere bei Verwendung mehrerer, am Fahrzeugsitz angreifender Aktoren, die ein Verschwenken bzw. Verkippen des Fahrzeugsitzes sowohl um die x- als auch die y-Achse bewirken. Ein derartiges kombiniertes Verschwenken des Fahrzeugsitzes ist beispielsweise mit wenigstens drei, vorzugsweise vier Aktoren realisierbar, die unterhalb des Fahrzeugsitzes mit dem Karosserieboden verbunden sind. Je nach Ansteuerung der jeweiligen Aktoren, die getrennt voneinander aktivierbar sind, können beliebige Fahrzeugsitzneigungen vorgenommen werden.

Auch ist eine gezielte Sitzrotation um die Hochachse, z-Achse, als technisch realisierbar vorstellbar, indem der Fahrzeugsitz auf einen mittig unter dem Fahrzeugsitz angebrachten Drehpunkt gelagert ist. Zur sicheren, festen Lagerung des Fahrzeugsitzes ist eine lösbare Verriegelung vorzusehen, die lediglich im Kollisionsfall zu öffnen ist und eine Aktor unterstützte Rotation des Fahrzeugsitzes um die Hochachse gestattet.

Nicht notwendiger Weise sind die Aktoren zur Verkippung des Fahrzeugsitzes als intelligente Strukturen auszubilden. Grundsätzlich ist es möglich die Aktoren als konventionelle Stellglieder auszubilden, bspw. als pneumatische oder hydraulische Kolben-Hubeinheiten oder in Form elektromotorischer oder magnetmotorischer Antriebe, auch ist der Einsatz pyrotechnischer Aktoren denkbar. Besonders vorteilhaft ist es jedoch die Ausbildung der Aktoren nach der eingangs beschriebenen Art vorzunehmen, nämlich durch gezielte Verwendung von Wandlerwerkstoffen, die zur kontrollierten Formänderung in der Lage sind.

Wie bereits erwähnt bedarf es einer sicheren und festen Lagerung des Fahrzeugsitzes, die durch entsprechend aktiv lösbare, verriegelbare Abstützstellen, die den Fahrzeugsitz mit dem Bodenbereich der Karosserie fest verbinden, garantiert wird. Nur im bzw. kurz vor dem Kollisionsfall gilt es, die Verbindungen verzögerungsfrei zu öffnen, so dass die Aktoren den Fahrzeugsitz in einer geeigneten Weise bewegen können, im Sinne der vorstehend beschriebenen Linear- und/oder Rotationsbewegungen. In vorteilhafter Weise sind die Verriegelungsmechanismen selbst auch mit Hilfe von Wandlerwerkstoffen realisiert, vorzugsweise unter Verwendung von Formgedächtnislegierungen, die unmittelbar zeitlich vor Eintritt einer Kollision sowie während der Kollision aktivierbar sind und einen entsprechend ausgebildeten Verriegelungsmechanismus in eine geöffnete Stellung überführen.

Neben der vorstehend beschriebenen Funktion der jeweiligen Aktoren zur gezielten Bewegung bzw. Verkippung des Fahrzeugsitzes dienen die Wandlerwerkstoffe aufgrund ihrer individuell einstellbaren Materialcharakteristik in Bezug auf ihre Materialsteifigkeit als veränderlich einstellbare Dämpfungselemente, die eine Stoßimpuls-Absorption ermöglichen, wodurch die Stoßbelastung auf den Insassen reduziert wird.

Zur Ansteuerung der mit dem jeweiligen Fahrzeugsitz in Wirkverbindung tretenden Aktoren dient eine im Kraftfahrzeug vorgesehene Auswerte- und Steuereinheit, die zur Beurteilung von sich möglicherweise anbahnenden Kollisionssituationen Sensorsignale von geeignet am KFZ angebrachten Sensoreinheiten auswertet und im Falle einer als unvermeidbar erkannten zeitlich kurz bevorstehenden Kollisionssituation an die jeweiligen Aktoren entsprechende Signale abgibt. Zur Erfassung der jeweiligen Kollisionssituationen sind am Fahrzeug entsprechende Annäherungssensoren vorgesehen, mit denen eine Objektannäherung detektierbar ist. Darüber hinaus tragen am Kraftfahrzeug angebrachte Beschleunigungssensoren dazu bei, den Eintritt einer Kollision zweifelsfrei festzustellen, durch die beispielsweise das Airbag-System im Fahrzeuginneren ausgelöst wird.

Die Ansteuerung der einzelnen Aktoren erfolgt in Abhängigkeit der detektierten Kollisionssituation unter Zugrundelegung der aus der Adaptronik sowie Mechatronik bekannten Ansteuertechniken. An dieser Stelle sei ausdrücklich auf die beiden vorstehend genannten Technikbereiche verwiesen, in denen Wandlerwerkstoffe eine zentrale Bedeutung spielen.

### Kurze Beschreibung der Erfindung

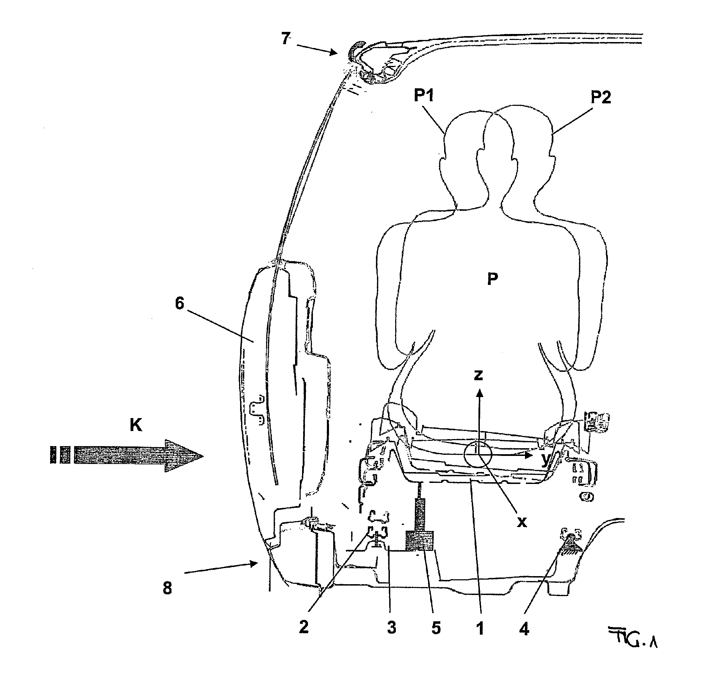

Die Erfindung wird anhand eines Ausführungsbeispiels unter Bezugnahme auf die einzige Figur beschrieben, die einen schematisierten Querschnitt durch eine Fahrgastzelle eines Kraftfahrzeuges darstellt.

Auf dem Fahrersitz 1 eines Kraftfahrzeuges sitzt eine Person P. Die stark schematisiert dargestellte Person P ist in zwei Situationen dargestellt, nämlich in einem Grundzustand P1 und in einem Kollisionszustand P2. Der Fahrzeugsitz 1 der ebenfalls in beiden, vorstehend bezeichneten Zuständen dargestellt ist, ist im Grundzustand einerseits mit einem lösbar festen Fixiermechanismus 2 mit dem Fahrzeugboden 3 verbunden. Auf der anderen Seite befindet sich der Fahrzeugsitz 1 in einem nicht lösbaren, aber rotationsbeweglichen Eingriff mit einem fest am Bodenbereich 3 angebrachten Kugelkopfelement 4. Ferner ist unterhalb des Fahrzeugsitzes 1 ein Aktor 5 vorgesehen, der sich ebenfalls am Fahrzeugboden 3 abstützt. Links vom Fahrzeugsitz 1 ist im Querschnitt eine Fahrzeugtür 6 angedeutet, die zwischen dem Deckenbereich 7 und dem Schwellerbereich 8 des Kraftfahrzeuges anliegt. Nicht in der Zeichnung dargestellt sind Sensor- bzw. Gebersysteme, durch die eine zeitlich unmittelbar bevorstehende Kollisionsgefahr bzw. den Eintritt einer Kollision detektiert und in Form von Sensorsignalen an eine Auswerte- und Steuereinheit weitergeben werden, die letztlich die im weiteren geschilderten Funktionen veranlasst.

Im dargestellten Fall sei angenommen, dass auf das Kraftfahrzeug ein seitlicher Krafteintrag K einwirkt, wie er beispielsweise in einer Seitenaufprall-Situation vorkommt. In dieser Situation wird der Fixiermechanismus 2 gelöst, der gleichsam dem Aktor 5 über einen Wandlerwerkstoff verfügt, der durch entsprechende elektrische Ansteuerung den Fixiermechanismus 3 freigibt. Zeitlich unmittelbar darauffolgend erfährt das im Aktor 5 vorhandene Wandlerelement, vorzugsweise in Form einer Formgedächtnislegierung, eine spontane Längenausdehnung, wodurch der Fahrzeugsitz 1 einseitig, gemäß der in der Figur dargestellten Situation, angehoben wird. Hierbei tritt eine Rotation des Fahrzeugsitzes um den festen Auflagerpunkt 4 ein, wodurch die Person P in den durch P2 markierten Zustand verkippt wird. Durch die gezielt kontrollierte Verkippung des Fahrzeugsitzes 1 und die darauf befindliche Person P in den Zustand P2 erfährt die Person P einen Krafteintrag unter einem physiologisch auf die Person P günstigeren, einwirkenden Winkel, so dass die Verletzungsgefahr der Person P deutlich herabgesetzt wird. Ebenso ermöglicht die in der Figur dargestellte Rotation eine Vergrößerung des Abstandes zum Türbereich 6, wodurch der Knautschzonenbereich vergrößert wird.

Das vorstehend gezeigte Ausführungsbeispiel ermöglicht eine gezielte Rotation des Fahrersitzes um die in der Figur eingezeichneten x-Achse, wodurch eine Verletzungsgefahrreduzierung in Seitenaufprall-Situationen deutlich herabgesetzt werden kann. Selbstverständlich lässt sich das in der Figur dargestellte Ausführungsbeispiel durch Verwendung mehrerer Aktoren dahingehend erweitern, so dass ebenfalls eine gezielte Rotation des Fahrzeugsitzes 1 um die y-Achse möglich wird, um Rotationsbewegungen des Fahrzeugsitzes 1 durchzuführen, die im Falle eines Frontalzusammenstoßes eine vorteilhafte Wirkung auf die physiologische Belastbarkeit der Person P haben. Auch sind Rotationen um die z-Achse durch entsprechende Positionierung von Aktoren denkbar.

### Bezugszeichenliste

- 1: Fahrzeugsitz
- 2: Fixiermechanismus
- 3: Fahrzeugboden
- 4: Kugelelement / festes Lager
- 5: Aktor
- 6: Fahrzeugtür
- 7: Deckenbereich
- 8: Schwellerbereich

## Patentansprüche

1. Vorrichtung zum Insassenschutz in einem Fahrzeug, insbesondere in einem Kraftfahrzeug, zur Reduzierung eines im Wege einer Kollision des Fahrzeuges hervorgerufenen, auf einen, auf einem Fahrzeugsitz (1) sitzenden Insassen (P) einwirkenden Energieeintrags, mit einem relativ zum Fahrzeug beweglich angeordneten Fahrzeugsitz (1), der durch wenigstens einen ansteuerbaren Aktor (5) aus einer Ruheposition in Bewegung relativ zum Fahrzeug versetzbar ist, sowie einer Auswerte- und Steuereinheit, die in Abhängigkeit von Gebersignalen, die von am Fahrzeug angebrachten Gebern herrühren, sowie von vorgebbaren Referenzwerten den Aktor (5) zur gezielten Fahrzeugsitzbewegung ansteuert, wobei der wenigstens eine ansteuerbare Aktor (5)eine intelligente Struktur aufweist, die durch Ansteuerung auf der Grundlage wenigstens eines Wandierwerkstoffes eine die Fahrzeugsitzbewegung
initiierende Formänderung erfährt
**dadurch gekennzeichnet, dass** die Beweglichkeit des gesamten Fahrzeugsitzes (1) durch bis zu drei Raumachsen beschreibbar ist, nämlich eine in
Fahrzeuglängsrichtung gerichtete x-Achse und eine senkrecht zur x-Achse orientierte y-Achse, die zugleich senkrecht zu einer durch den Fahrzeugsitz (1) hindurch tretenden Hochachse, die so genannte z-Achse orientiert ist,
dass wenigsten ein Aktor (5) derart vorgesehen ist, dass der gesamte Fahrzeugsitz (1) um die x-Achse schwenkbar ist, und
dass wenigstens ein Aktor (5) derart vorgesehen ist, dass der gesamte Fahrzeugsitz (1) um die y-Achse schwenkbar ist.

2. Vorrichtung nach Anspruch 1.
**dadurch gekennzeichnet, dass** der Wandlerwerkstoff aus wenigstens einer der nachfolgenden Werkstoffklassen besteht: Piezo-Keramik, Piezo-Polymer,
elektrostriktive Keramik, elektrorheologische Fluid, Polymergel, magnetorheologische Fluid, magnetoviskose Legierung, Formgedächtnislegierung,
Formgedächtnispolymer.

3. Vorrichtung nach Anspruch 1 oder 2,
**dadurch gekennzeichnet, dass** wenigstens ein Aktor derart vorgesehen ist, dass der gesamte Fahrzeugsitz um die z-Achse schwenkbar ist.

4. Vorrichtung nach einem der Ansprüche 1 bis 3,
**dadurch gekennzeichnet, dass** wenigstens drei vorzugsweise vier Aktoren unter dem Fahrzeugsitz zwischen dem Fahrzeug und dem Fahrzeugsitz angebracht sind, die im Falle einer Kollision derart ansteuerbar sind, dass der Fahrzeugsitz um die x- und um die y-Achse derart schwenkbar ist, dass ein physiologisch günstigerer Energieeintrag auf den Insassen vor und während der Kollision einwirkt als im Falle ohne Fahrzeugsitzverstellung.

5. Vorrichtung nach einem der Ansprüche 1 bis 4,
**dadurch gekennzeichnet, dass** der wenigstens eine Aktor den Fahrersitz gezielt innerhalb einer Ebene verfährt, die von der x- und y-Achse aufgespannt ist, und dass der Fahrersitz längs einer in der Ebene verlaufenden Trajektorie verschiebbar ist, die in Richtung des Energieeintrages gerichtet ist.

6. Vorrichtung nach einem der Ansprüche 1 bis 5,
**dadurch gekennzeichnet, dass** der Fahrzeugsitz über einen Fixiermechanismus fest am Fahrzeug befestigt ist, der vor und während der Kollision lösbar ist und die Fahrzeugsitzbewegung durch den wenigstens einen Aktor bestimmt ist.

7. Vorrichtung nach Anspruch 6,
**dadurch gekennzeichnet, dass** der Fixiermechanismus zumindest teilweise aus einen Wandlerwerkstoff gefertigt ist, der durch Aktivierung einen geöffneten Zustand einnimmt.

8. Vorrichtung nach einem der Ansprüche 3 bis 7,
**dadurch gekennzeichnet, dass** der Fahrzeugsitz zentrisch auf einem arretierbaren Drehlager aufliegt, das im Kollisionsfall entriegelbar ist,
und dass wenigstens ein Aktor vorgesehen ist, der im Kollisionsfall den Fahrzeugsitz im oder entgegen den Uhrzeigersinn um einen vorgebbaren Drehwinkel um die z-Achse verdreht.

9. Vorrichtung nach einem der Ansprüche 1 bis 8,
**dadurch gekennzeichnet, dass** die intelligente Struktur als sich selbst regelnde Struktur auf der Grundlage der Adaptronik arbeitet.

10. Vorrichtung nach einem der Ansprüche 1 bis 9,
**dadurch gekennzeichnet, dass** die intelligente Struktur als sich selbst regelnde Struktur auf der Grundlage der Mechatronik arbeitet.

## Claims

1. A device for protecting passengers in a vehicle, particularly in a motor vehicle, by reducing a force input, which is caused during a collision of the vehicle, physiologically acting on a passenger (P) seated on a vehicle seat (1), using a vehicle seat (1) positioned movably in relation to the vehicle, which may be set in motion in relation to the vehicle from a rest position by at least one activatable actuator (5), as well as an analysis and control unit, which activates the actuator (5) for targeted vehicle seat movement as a function of sensor signals, which originate from sensors attached to the vehicle, and of predefinable reference values, the at least one activatable actuator (5) having an intelligent structure, which undergoes a shape change initiating the vehicle seat movement through activation on the basis of at least one conversion material
**characterized in that** the mobility of the entire vehicle seat (1) is describable by up to three spatial axes, namely
an x axis oriented in the vehicle longitudinal direction and a y axis oriented perpendicularly to the x axis, which is simultaneously oriented perpendicularly to a vertical axis passing through the vehicle seat (1), the so-called z axis,
at least one actuator (5) is provided in such a manner that the entire vehicle seat (1) is pivotable around the x axis, and
at least one actuator (5) is provided in such a manner that the entire vehicle seat (1) is pivotable around the y axis.

2. The device according to Claim 1,
**characterized in that** the conversion material comprises at least one of the following material classes: piezo ceramic, piezo polymer, electrostrictive ceramic, electrorheological fluid, polymer gel, magnetorheological fluid, magnetoviscous alloy, shape memory alloy, shape memory polymer.

3. The device according to Claim 1 or 2,
**characterized in that** at least one actuator is provided in such a manner that the entire vehicle seat is pivotable around the z axis.

4. The device according to Claim 3,
**characterized in that** at least three, preferably four actuators are attached below the vehicle seat between the vehicle and the vehicle seat, which are activatable in case of a collision in such a manner that the vehicle seat is pivotable around the x axis and/or around the y axis in such a manner that a physiologically more favorable energy input acts on the passengers before and during the collision than without vehicle seat adjustment.

5. The device according to one of Claims 1 through 4,
**characterized in that** the at least one actuator moves the vehicle seat in a targeted manner within a plane which is spanned by the x and y axes, and
the vehicle seat is displaceable along a trajectory running in the plane, which is directed in the direction of the energy input.

6. The device according to one of Claims 1 through 5,
**characterized in that** the vehicle seat is solidly attached to the vehicle via a fixing mechanism, which may be loosened before and during the collision, and the vehicle seat movement is determined by the at least one actuator.

7. The device according to Claims 6,
**characterized in that** the fixing mechanism is at least partially manufactured from a conversion material, which assumes an open status through activation.

8. The device according to one of Claims 3 through 7,
**characterized in that** the vehicle seat rests centrally on a lockable pivot bearing, which is unlockable in case of collision,
and at least one actuator is provided, which pivots the vehicle seat clockwise or counterclockwise by a predefinable rotational angle around the z axis in case of collision.

9. The device according to one of Claims 1 through 8,
**characterized in that** the intelligent structure operates as a self-regulating structure based on adaptronics.

10. The device according to one of Claims 1 through 9,
**characterized in that** the intelligent structure operates as a self-regulating structure based on mechatronics.

## Revendications

1. Dispositif pour la protection des passagers d'un véhicule, notamment dans un véhicule automobile, pour la réduction d'une introduction de force qui, provoquée par la voie d'une collision du véhicule, agit sur un passager (P) assis sur un siège de véhicule (1), avec un siège de véhicule (1) disposé de façon mobile par rapport au véhicule, qui par au moins un actionneur (5) activable est susceptible d'être amené d'une position de repos en déplacement par rapport au véhicule, et avec une unité d'évaluation et de commande, qui en fonction de signaux d'un transmetteur émanant de transmetteurs montés sur le véhicule et de valeurs de référence prédéfinissables active l'actionneur (5) pour le déplacement adéquat du siège de véhicule, le au moins un actionneur (5) activable présentant une structure intelligente, qui par activation sur la base d'au moins un matériau transducteur subit une modification de forme initiant le déplacement du véhicule automobile
**caractérisé en ce que** la mobilité de l'ensemble du siège de véhicule (1) se décrit par deux ou trois axes de coordonnées spatiales, à savoir un axe X orienté en direction longitudinale du véhicule et un axe Y orienté à la perpendiculaire de l'axe X, qui est orienté simultanément à la perpendiculaire d'un axe normal traversant le siège de véhicule (1), le dénommé axe Z,
**en ce qu'**il est prévu au moins un actionneur (5), de sorte que l'ensemble du siège de véhicule (1) soit susceptible de pivoter autour de l'axe X et
**en ce qu'**il est prévu au moins un actionneur (5), de sorte que l'ensemble du siège de véhicule (1) soit susceptible de pivoter autour de l'axe Y.

2. Dispositif selon la revendication 1,
**caractérisé en ce que** le matériau transducteur consiste dans au moins l'un des matériaux suivants, piézocéramique, piézopolymère, céramique électrorestrictive, fluide électrorhéologique, gel polymère, fluide magnétorhéologique, alliage magnéto-visqueux, alliage à mémoire de forme, polymère à mémoire de forme.

3. Dispositif selon la revendication 1 ou 2,
**caractérisé en ce qu'**au moins un actionneur est prévu de sorte que l'ensemble du siège de véhicule (1) soit susceptible de pivoter autour de l'axe Z.

4. Dispositif selon l'une quelconque des revendications 1 à 3,
**caractérisé en ce qu'**au moins trois, de préférence quatre actionneurs sont montés sous le siège de véhicule, entre le véhicule et le siège de véhicule, qui dans le cas d'une collision sont activables de sorte que le siège de véhicule soit susceptible de pivoter autour de l'axe X et autour de l'axe Y, de sorte qu'une introduction d'énergie physiologiquement plus favorable qu'en l'absence d'un déplacement du siège de véhicule agisse sur le passager, avant et pendant la collision.

5. Dispositif selon l'une quelconque des revendications 1 à 4,
**caractérisé en ce que** le au moins un actionneur déplace le siège de véhicule de façon adéquate dans un plan qui est dressé par l'axe X et Y et **en ce que** le siège de véhicule est déplaçable le long d'une trajectoire s'étendant dans le plan qui est orienté en direction de l'introduction d'énergie.

6. Dispositif selon l'une quelconque des revendications 1 à 5,
**caractérisé en ce que** le siège de véhicule est relié solidement au véhicule par l'intermédiaire d'un mécanisme de fixation, qui est amovible avant et pendant la collision et **en ce que** le déplacement du siège de véhicule est défini par au moins un actionneur.

7. Dispositif selon la revendication 6,
**caractérisé en ce que** le mécanisme de fixation est fabriqué au moins partiellement dans un matériau transducteur, qui par activation adopte une position ouverte.

8. Dispositif selon l'une quelconque des revendications 3 à 7,
**caractérisé en ce que** le siège de véhicule repose au centre sur un coussinet de pivotement blocable, qui est déverrouillable en cas de collision,
et **en ce qu'**il est prévu au moins un actionneur, qui en cas de collision fait tourner le siège de véhicule dans ou à l'encontre du sens horaire, de la
valeur d'un angle de rotation prédéfini, autour de l'axe Z.

9. Dispositif selon l'une quelconque des revendications 1 à 8,
**caractérisé en ce que** la structure intelligente fonctionne comme une structure auto réglable sur la base de l'adaptronique.

10. Dispositif selon l'une quelconque des revendications 1 à 9,
**caractérisé en ce que** la structure intelligente fonctionne comme une structure auto réglable sur la base de la mécatronique.
